# EUROPÄISCHE PATENTSCHRIFT

(11) **EP 2 403 754 B1**
(45) Veröffentlichungstag und Bekanntmachung des Hinweises auf die Patenterteilung: **01.05.2013**
(21) Anmeldenummer: 10705163.3
(22) Anmeldetag: 23.02.2010
(51) Int. Cl.: B64C 1/06

(54) **VERBINDUNGSVORRICHTUNG**
ATTACHMENT DEVICE
DISPOSITIF D'ATTACHE

(30) Priorität: 05.03.2009 DE 102009011904
(43) Veröffentlichungstag der Anmeldung: 11.01.2012
(73) Patentinhaber: SFS intec Holding AG, 9435 Heerbrugg (CH)
(72) Erfinder: COSTABEL, Sascha, 75443 Ötisheim (DE); SCHMIDT, Markus, 75391 Gechingen (DE)
(86) Internationale Anmeldenummer: PCT/EP2010/052262
(87) Internationale Veröffentlichungsnummer: WO 2010/100057

(56) Entgegenhaltungen:
- EP-A2- 1 193 403
- DE-B3-102006 012 730

## Beschreibung

Die Erfindung betrifft ein Befestigungssystem zum lösbaren Befestigen eines Ausstattungsteils wie einer Innenverkleidung an einer Tragstruktur wie einem Flugzeugrumpf, mit wenigstens einer Steckhalterung aus einem Buchsenteil und einem darin lösbar arretierbaren Verbindungsstift, mit einem Strukturhalter, mit wenigstens einem Verbindungsarm zum Befestigen der Steckhalterung zwischen dem Ausstattungsteil und der Tragstruktur und mit einer zwischen dem Verbindungsarm und dem Buchsenteil anzuordnenden elektrischen Kontaktvorrichtung, wobei der Verbindungsarm einen ersten und einen zweiten Endteil aufweist, von denen einer den Verbindungsstift trägt.

Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, S. 23). Befestigungssysteme der eingangs genannten Art sind hingegen zur Befestigung von Elementen der Innenverkleidung eines Flugzeuges wie Wand- und Deckenverkleidungsteilen bestimmt. Grundsätzlich soll es auch möglich sein, eine bestehende konfigurierte Lösung, zum Beispiel die Kabinenausstattung für einen Langstreckenflug, kurzfristig umkonfigurieren zu können, zum Beispiel die Kabinenausstattung für einen Kurzstreckenflug herrichten zu können. Die standardisierten Schnittstellen sollen dabei bei allen Flugzeugkategorien gleichermaßen anwendbar sein. Weiter soll dabei gewährleistet sein, dass die standardisierten Schnittstellen Klappergeräusche der miteinander verbundenen Bauteile sicher verhindern.

Ein Befestigungssystem der eingangs genannten Art ist aus der EP 1 193 403 A2 bekannt. Dieses bekannte Befestigungssystem ist eine in X/Y-Koordinatenrichtung justierbare Platteneinheit für lösbar durch Federclips anzubringende Wandverkleidungselemente und besteht aus einer ersten, in X-Richtung justierbaren Basisplatte und einer zweiten, in Y-Richtung justierbaren Halteplatte. Die Basisplatte weist mindestens zwei in X-Richtung ausgerichtete, miteinander fluchtende erste Langlöcher auf zur gedachten, in X-Richtung justierbaren Befestigung der Basisplatte an einer Wand, bei der es sich um die Tragstruktur oder den Rumpf eines Flugzeuges handeln kann. Die Halteplatte weist mindestens zwei in Y-Richtung ausgerichtete, miteinander fluchtende zweite Langlöcher auf, durch welche die Basisplatte mit der in Y-Richtung justierbare Halteplatte mittels Verbindungselementen verbunden ist. Auf der Halteplatte sind auf der der Basisplatte zugewandten Seite an den Eckpunkten eines in X/Y-Richtung ausgerichteten gedachten Rechtecks Haltefedern zur Aufnahme von Haltesteckbolzen angeordnet, welche die Verbindungsstifte einer Steckhalterung bilden und mit einem Wandverkleidungselement, bei dem es sich um einen Teil der Innenverkleidung eines Flugzeuges handeln kann, verbunden sind. Der Verbindungsstift oder Haltesteckbolzen ist über ein Dämpfungselement und einen gekröpften Verbindungsarm mit dem Wandverkleidungselement verbunden. Dafür weist der Verbindungsarm zwei Bohrungen zur Befestigung des Wandverkleidungselementes auf, wobei sich über die Art der Befestigung in der EP 1 193 403 A2 keine näheren Angaben finden.

Wenn in einem Flugzeug ein Teil der Innenverkleidung wie zum Beispiel ein Panel, das Teile der elektrischen Ausrüstung tragen kann, aus der Decke oder der Innenwand wie eine Klappe herausgeschwenkt wird, müssen die Kabel, die mit den Ausrüstungsteilen an dem Panel verbunden sind, den Weg des Panels mitmachen. Damit die Kabel die Bewegung des Panels nicht behindern, müssen die an das Panel angeschlossenen Kabel eine gewisse Überlänge aufweisen. In einem Flugzeug, wo die Länge der eingebauten Kabel viele Kilometer misst, führen die vorgenannten Überkabellängen zu einem unerwünschten zusätzlichen Gewicht, das in der Größenordnung von mehreren hundert Kilogramm liegen kann. Wenn ein Panel von der Decke oder der Innenverkleidung zu lösen ist, ist es darüber hinaus erforderlich, elektrische Steckverbindungen zu trennen, die später bei dem Wiedereinbau des Panels wieder von Hand zusammengesteckt werden müssen.

Die DE 10 2006 012 730 B3 beschreibt ein Befestigungssystem zum Befestigen eines Kabinenausstattungselements an einer Tragstruktur eines Flugzeugs, mit dem sich die vorgenannten Probleme der Überkabellänge und des Herstellens und Auftrennens von Steckverbindungen teilweise lösen lassen sollen. Dazu wird von der Überlegung ausgegangen, die benötigten elektrischen Kontakte, die bei dem Abnehmen eines Teils der Innenverkleidung getrennt und später wieder verbunden werden müssen, in wenigstens eines von mehreren mechanischen Lagern, mit denen Tragstruktur und Innenverkleidung verbunden sind, zu integrieren, so dass beim Einkoppeln eine elektrische Verbindung mit mehreren Kontakten zwischen Tragstruktur und Innenverkleidung hergestellt wird. Bei diesem bekannten Befestigungssystem wird eine elektrische Kontaktvorrichtung mit einer Buchsenanordnung und einer Steckeranordnung in wenigstens einem Lager eines Ausstattungsteils ausgebildet, durch die eine elektrische Verbindung zwischen der Tragstruktur und der elektrischen Einrichtung des Kabinenausstattungsteils beim Fixieren dieses Lagers hergestellt wird. Dieses Lager mit integrierter Kontaktvorrichtung hat aber einen anderen Aufbau des Befestigungssystems als ein Lager ohne Kontaktvorrichtung. Das macht den Einsatz dieses bekannten Befestigungssystems unflexibler.

Aufgabe der Erfindung ist es, ein Befestigungssystem der eingangs genannten Art so auszubilden, dass bei Bedarf auf einfachere und flexiblere Weise auf ein Lager mit Kontaktvorrichtung übergegangen werden kann.

Diese Aufgabe ist erfindungsgemäß durch ein Befestigungssystem der eingangs genannten Art dadurch gelöst, dass der Verbindungsarm gekröpft und so bemessen ist, dass wenn der Verbindungsstift in dem Buchsenteil lösbar arretiert ist, der Verbindungsarm in einer ersten, "normalen" Stellung ist, in der er und das Buchsenteil in einer Trennebene miteinander in Berührung sind, dass aber, wenn der Verbindungsarm in einer zweiten, um 180° um seine Längsachse gedrehten Stellung ist, der Verbindungsarm einen Abstand von der Trennebene aufweist, der durch die elektrische Kontaktvorrichtung überbrückt oder überbrückbar ist, und an dem Verbindungsarm ein anderer Verbindungsstift angebracht ist, der um den Abstand länger als der eine Verbindungsstift bemessen ist, wobei der andere Verbindungsstift durch die Kontaktvorrichtung hindurchgeführt oder hindurchführbar und in dem Buchsenteil arretiert oder arretierbar ist, wobei die Beabstandung des Strukturhalters von dem Buchsenteil in Richtung des Verbindungsstiftes bei "normaler" Montage des Verbindungsarmes ohne Anbringung der elektrischen Kontaktvorrichtung und bei der um 180° gedrehten Lage des Verbindungsarms bei Anbringung der elektrischen Kontaktvorrichtung gleich bleibt und wobei der Strukturhalter so ausgebildet ist, dass er eine Aufnahme des Verbindungsarms sowohl in der "normalen" als auch in der um 180° gedrehten Lage erlaubt.

Das Befestigungssystem nach der Erfindung ermöglicht das Herstellen einer Verbindung zwischen einem Ausstattungsteil und einer Tragstruktur mit Hilfe eines Strukturhalters und eines daran lösbar angebrachten Verbindungsarms wahlweise mit oder ohne eine elektrische Kontaktvorrichtung. Wenn keine elektrische Kontaktvorrichtung benötigt wird, wird der Verbindungsarm in einer ersten Stellung an dem Strukturhalter angebracht. Wenn eine elektrische Kontaktvorrichtung in die Verbindung integriert werden soll, braucht lediglich der Verbindungsarm in eine zweite, um 180° um die Längsachse des Verbindungsarms gedrehte Stellung gebracht zu werden. Der Strukturhalter behält seine ursprüngliche Lage bei. Wenn die Verbindung hergestellt ist und sich eine elektrische Kontaktvorrichtung zwischen dem Verbindungsarm und dem Buchsenteil befindet, nimmt das Buchsenteil die gleiche räumliche Lage ein wie in dem Fall, in welchem sich keine elektrische Kontaktvorrichtung zwischen ihm und dem Verbindungsarm befindet. Das Befestigungssystem nach der Erfindung benötigt aufgrund seines Aufbaus für den Einsatz einer elektrischen Kontaktvorrichtung zusätzlich daher lediglich einen anderen Verbindungsstift, der um den Abstand länger ist, welcher durch die elektrische Kontaktvorrichtung zwischen dem Verbindungsarm und dem Buchsenteil überbrückt wird. Bei dem erfindungsgemäßen Befestigungssystem kann entweder derselbe Verbindungsarm verwendet werden, an dem der Verbindungsstift gegen einen anderen Verbindungsstift mit entsprechender Länge ausgetauscht wird, bevor der Verbindungsarm in seiner zweiten, um 180° gedrehten Stellung wieder an dem Strukturhalter arretiert wird, oder es kann ein anderer, bereits mit einem längeren Verbindungsstift vorfabrizierter Verbindungsarm verwendet werden, der dann lediglich gegen den Verbindungsarm mit kürzerem Verbindungsstift ausgetauscht wird, wenn eine elektrische Kontaktvorrichtung eingesetzt werden soll, und umgekehrt.

Im Gegensatz zu dem eingangs geschilderten Stand der Technik nach der EP 1 193 403 A2 ist bei dem Befestigungssystem nach der Erfindung der Verbindungsarm gekröpft und an dem Strukturhalter statt an dem Ausstattungsteil angebracht. Der erfindungsgemäß verwendete Strukturhalter, der vorzugsweise zwar an der Tragstruktur befestigt wird, alternativ aber auch an dem Ausstattungsteil befestigt sein könnte, braucht in seinem Aufbau nicht modifiziert zu werden, ungeachtet dessen, ob eine elektrische Kontaktvorrichtung eingesetzt wird oder nicht. Ein Verbindungsstift ist auf einfache Weise gegen einen längeren oder kürzeren Verbindungsstift austauschbar, je nachdem, ob eine elektrische Kontaktvorrichtung benutzt wird oder nicht.

Aus der DE 82 12 130 U1 ist es bekannt, gekröpfte oder stufenförmige Kabelhalterstangen an einer Werkbank steckbar zu befestigen, um Garnituren einer Kabelstrecke in unterschiedlichen Höhen montieren zu können. Durch die Stufenform der Kabelhalterstangen, durch Höhenunterschied der Einschübe in Tischplatten der Werkbank und durch die Möglichkeit, die Kabelhalter in ihren Einschüben nach oben und nach unten zeigend unter Ausnutzung der Verschiebelänge festlegen zu können, ist die Montage von Garnituren einer Kabelstrecke mit am Boden liegenden Garnituren ebenso möglich wie die Montage von Garnituren in Brusthöhe zum Zwecke der Demonstration. Die unterschiedlichen Höhen werden dabei nicht nur durch Drehen der Kabelhalterstangen hergestellt, sondern zusätzlich mit Hilfe von Adaptern und Kabelhaltern, wobei die Adapter unterschiedlich lange Distanzstücke aufweisen können. Die Adapter in ihren verschiedenen Ausführungen sollen eine möglichst große Variationsbreite in der Kombination der Kabelhalter und des Zubehörs zueinander und deren Position ermöglichen. Die Drehung der Kabelhalterstangen um die Einsteckachse dient somit nicht zum Herstellen von unterschiedlichen Abständen zu einer Bezugsfläche. Zumindest dient die Drehung um die Einsteckachse nicht dem gleichen Zweck wie das Einstellen der beiden Stellungen bei dem gekröpften Verbindungsarm der Vorrichtung nach der Erfindung.

Vorteilhafte Ausgestaltungen der Erfindung bilden die Gegenstände der Unteransprüche.

In einer Ausgestaltung des Befestigungssystems nach der Erfindung ist der Strukturhalter ein flacher, plattenförmiger, mehreckiger Körper mit wenigstens einem Paar einander gegenüber liegender Seiten, der wenigstens eine in eine dieser Seiten mündende Kammer aufweist, in der der erste Endteil des Verbindungsarms lösbar verriegelt oder verriegelbar ist. Dieser Aufbau ermöglicht, den Verbindungsarm einfach durch Drehung um 180° um seine Längsachse in eine gewünschte andere Stellung zu bringen.

In einer weiteren Ausgestaltung des Befestigungssystems nach der Erfindung weist jeweils die Seite, in die die Kammer mündet, einen Vorsprung mit einer gegen diese Seite abgewinkelten Stirnfläche auf, wobei die Kammer in diese Stirnfläche mündet. Dieser Aufbau ermöglicht, auch auf der entgegengesetzten Seite des Körpers des Strukturhalters eine gleiche Kammer für mindestens einen weiteren Verbindungsarm vorzusehen oder auf allen Seiten jeweils eine Kammer für einen Verbindungsarm vorzusehen.

In einer weiteren Ausgestaltung des Befestigungssystems nach der Erfindung ist jeder Verbindungsstift über ein Dämpfungselement mit dem zweiten Endteil seines Verbindungsarms verbunden. Das Dämpfungselement ist vorzugsweise ein elastischer Körper. Das ermöglicht, die Verbindung zwischen der Tragstruktur und dem Ausstattungsteil elastisch vorgespannt herzustellen, wodurch sich unerwünschte Klappergeräusche im Einsatz noch einfacher verhindern lassen.

In einer weiteren Ausgestaltung des Befestigungssystems nach der Erfindung erstreckt sich das Dämpfungselement durch den zweiten Endteil des Verbindungsarms und steht auf beiden Seiten jeweils über den Verbindungsarm über. Dadurch kommt das Dämpfungselement mit dem an den Verbindungsarm anzuschließenden Teil, nämlich mit dem Buchsenteil der Steckhalterung oder mit der elektrischen Kontaktvorrichtung in Berührung und sorgt so für einen elastisch nachgiebigen Übergang zwischen denselben.

In einer weiteren Ausgestaltung des Befestigungssystems nach der Erfindung ist die lösbare Verbindung des Verbindungsarms mit dem Strukturhalter eine Clip- oder eine Schraubenverbindung. Der Verbindungsarm lässt sich so auf einfache Weise von dem Strukturhalter trennen und nach Drehung um 180° um seine Längsachse wieder an den Strukturhalter anschließen.

In einer weiteren Ausgestaltung des Befestigungssystems nach der Erfindung ist ein auf dem plattenförmigen Körper des Strukturhalters zwischen zwei einander gegenüber liegenden Seiten angebrachter Bügel zur Befestigung des Strukturhalters an der Tragstruktur vorgesehen. Der Bügel ermöglicht eine Einstellbarkeit des gesamten Strukturhalters in zwei Richtungen.

In einer weiteren Ausgestaltung des Befestigungssystems nach der Erfindung ist jeder Verbindungsstift an seinem Verbindungsarm so angebracht, dass er bei an dem Strukturhalter befestigtem Verbindungsarm zu der Trennebene hin vorsteht. Dadurch ist der Verbindungsstift der Steckhalterung stets mit dem Buchsenteil derselben in Eingriff bringbar, ungeachtet dessen, ob eine elektrische Kontaktvorrichtung eingesetzt wird oder nicht.

In einer weiteren Ausgestaltung des Befestigungssystems nach der Erfindung weist das Buchsenteil ein Gehäuse auf, welches einen federvorgespannten Schieber enthält, der durch das Einführen des einen oder anderen Verbindungsstiftes auslenkbar ist. Ungeachtet dessen, ob eine elektrische Kontaktvorrichtung eingesetzt wird oder nicht, lässt sich der Verbindungsstift der Steckhalterung mit dem Buchsenteil derselben in Eingriff bringen. Das Buchsenteil behält seine räumliche Lage bei, denn der Verbindungsstift der Steckhalterung wird stets in derselben Achse mit dem Buchsenteil in Eingriff gebracht, ungeachtet dessen, ob eine elektrische Kontaktvorrichtung eingesetzt wird oder nicht.

In einer weiteren Ausgestaltung des Befestigungssystems nach der Erfindung ist an dem Gehäuse des Buchsenteils ein Exzenterhebel zum Betätigen des federvorgespannten Schiebers angebracht. Dieser Exzenterhebel ermöglicht auf einfache Weise das Lösen der Verbindung zwischen dem Ausstattungsteil und der Tragstruktur, und zwar ungeachtet dessen, ob eine elektrische Kontaktvorrichtung eingesetzt wird oder nicht.

In einer weiteren Ausgestaltung des Befestigungssystems nach der Erfindung weist jeder Verbindungsstift an seinem freien Ende eine Nut auf, mit der der federvorgespannte Schieber in Eingriff ist oder bringbar ist. Die mechanische und die elektrische Verbindung ist dann hergestellt, wenn der Schieber mit der Nut des Verbindungsstifts in Eingriff ist.

In einer weiteren Ausgestaltung des Befestigungssystems nach der Erfindung weist jeder Verbindungsstift an seinem anderen Ende eine weitere Nut auf, mit der eine Haltescheibe in Eingriff ist oder bringbar ist. Die Haltescheibe, die vorzugsweise mit radial nach innen vorstehenden, federnden Fingern in die weitere Nut eingreift, ermöglicht auf einfache Weise, den Verbindungsstift an dem Verbindungsarm zu befestigen oder den Verbindungsstift gegen einen anderen, längeren oder kürzeren Verbindungsstift auszutauschen.

In einer weiteren Ausgestaltung des Befestigungssystems nach der Erfindung hat die Kontaktvorrichtung elektrische Kontakte, die in Richtung der Längsachse des Verbindungsstiftes miteinander verbindbar und voneinander trennbar sind. Gleichzeitig mit dem Herstellen/Trennen der mechanischen Verbindung zwischen dem Ausstattungsteil und der Tragstruktur kann so automatisch auch eine elektrische Verbindung hergestellt/getrennt werden.

Ausführungsbeispiele der Erfindung werden im Folgenden unter Bezugnahme auf die Zeichnungen näher beschrieben. Es zeigt
- Fig. 1: in perspektivischer Darstellung eine erste Ausführungsform eines Befestigungssystems nach der Erfindung,
- Fig. 2: als eine Einzelheit in Seitenansicht den rechten Teil des in Fig. 1 gezeigten Befestigungssystems,
- Fig. 3: das Befestigungssystem nach Fig. 2 in auseinandergezogener Darstellung, wobei ein Strukturhalter der Übersichtlichkeit halber nicht gezeigt ist,
- Fig. 4: in gleicher Darstellung wie in Fig. 1 die erste Ausführungsform des Befestigungssystems nach der Erfindung, jedoch in einer gegenüber der Darstellung in Fig. 1 um 90° im Gegenuhrzeigersinn gedrehten Darstellung,
- Fig. 5: als eine Einzelheit in Seitenansicht den linken Teil des in Fig. 1 gezeigten Befestigungssystems,
- Fig. 6: das Befestigungssystem nach Fig. 5 in auseinandergezogener Darstellung, wobei ein Strukturhalter der Übersichtlichkeit halber nicht gezeigt ist und wobei in Fig. 6a als eine Einzelheit ein Verbindungsstift dargestellt ist, und
- Fig. 7: in Seitenansicht eine zweite Ausführungsform eines Befestigungssystems nach der Erfindung, in welcher eine elektrische Kontaktvorrichtung in einer gegenüber der Darstellung in Fig. 4 um 90° im Uhrzeigersinn gedrehten Stellung gezeigt ist.

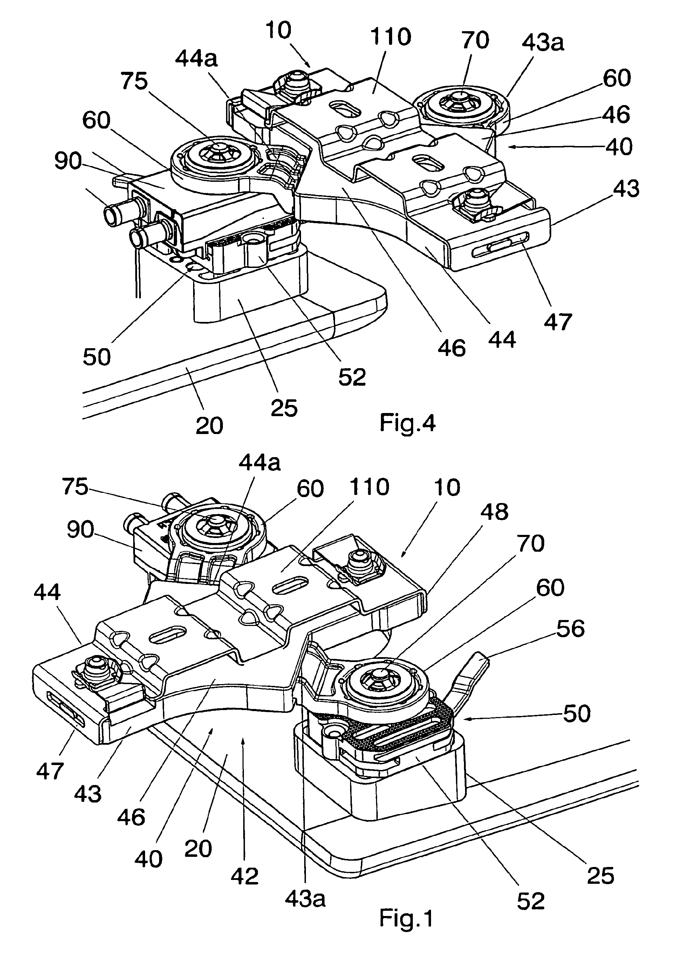

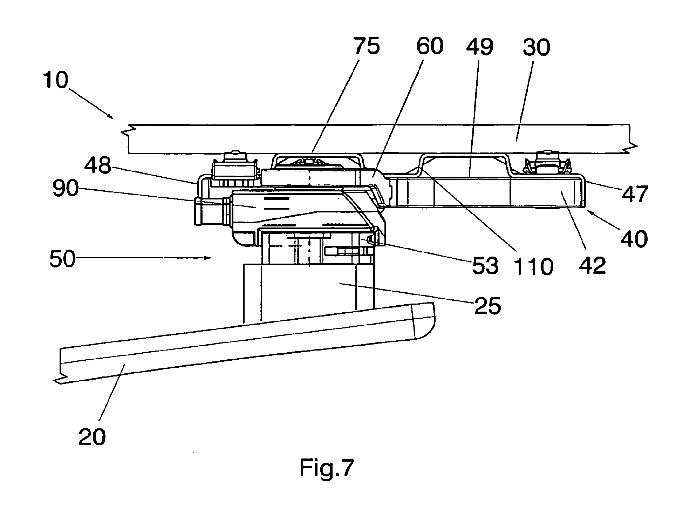

Eine erste Ausführungsform eines Befestigungssystems nach der Erfindung, die insgesamt mit 10 bezeichnet ist, ist in Fig. 1 in perspektivischer Darstellung in einer Ansicht schräg von oben gezeigt. Das Befestigungssystem 10 dient zum lösbaren Verbinden eines Ausstattungsteils 20 mit einer (nur in Fig. 7 angedeuteten) Tragstruktur 30. Das Ausstattungsteil 20 kann die Innenverkleidung der Kabine eines Flugzeuges sein, wobei dann die Tragstruktur 30 der Flugzeugrumpf ist. Die Verbindungsvorrichtung 10 umfasst einen Strukturhalter (im Englischen als structure bracket bezeichnet) 40 und wenigstens einen gekröpften Verbindungsarm 60. In dem dargestellten Ausführungsbeispiel hat das Befestigungssystem 10 einen Strukturhalter 40 mit zwei gekröpften Verbindungsarmen 60. Möglich ist aber auch ein Befestigungssystem 10 mit nur einem gekröpften Verbindungsarm 60 oder mit vier oder mehr als vier gekröpften Verbindungsarmen 60. Jeder Verbindungsarm 60 ist an eine in den Figuren insgesamt mit 50 bezeichnete Steckhalterung angeschlossen. Die Steckhalterung 50 verbindet das Ausstattungsteil 20 über den Verbindungsarm 60 lösbar mit dem Strukturhalter 40, der seinerseits durch einen Bügel 110 aus Metall oder einem Kohlefaser-Werkstoff an der Tragstruktur 30 befestigt ist. Der Bügel 110 ist auf der Oberseite 49 des Körpers 42 des Strukturhalters 40 befestigt, und an seinen Enden so abgewinkelt, dass er sich über Seiten 47 und 48 des Körpers 42 erstreckt.

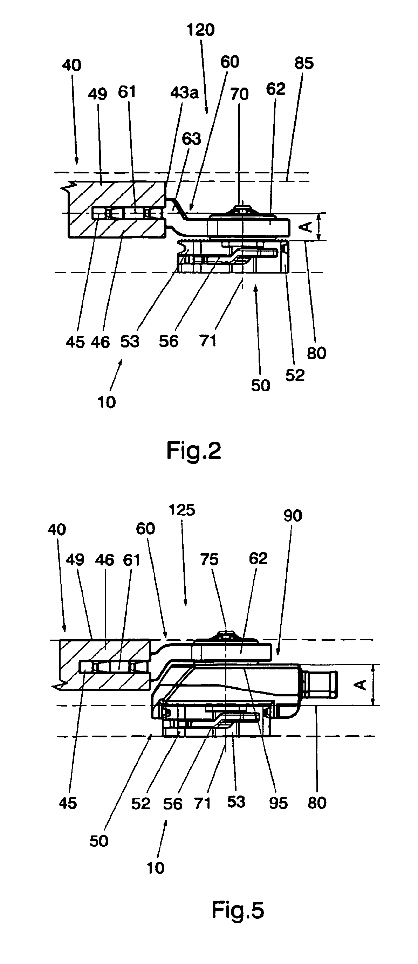

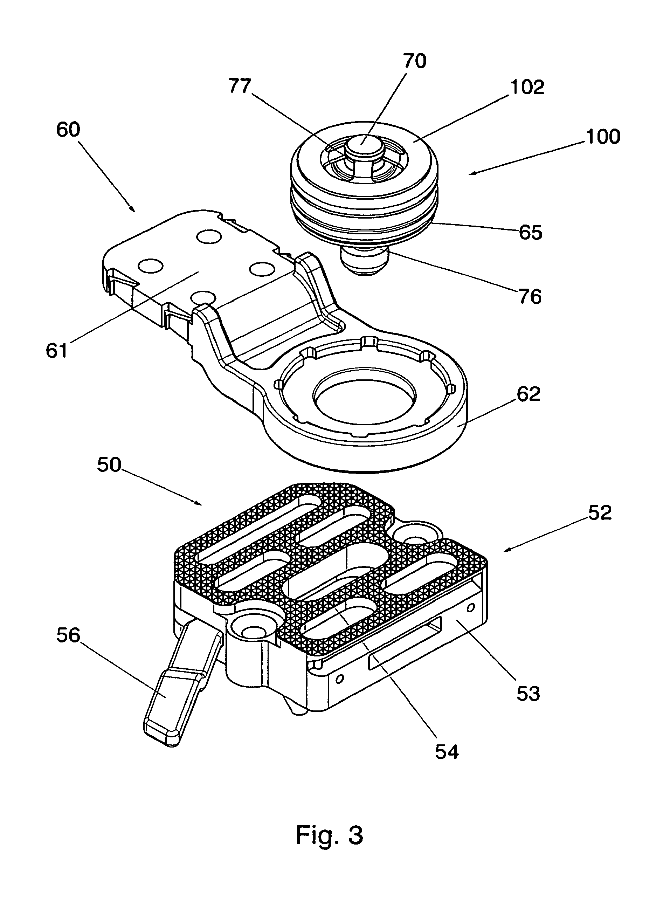

Die Steckhalterung 50, die in Fig. 3 in auseinander gezogener Darstellung gezeigt ist, umfasst ein insgesamt mit 52 bezeichnetes Buchsenteil und einen darin lösbar arretierbaren Verbindungsstift 70. Gemäß der Darstellung in den Fig. 2 und 3 weist der Verbindungsarm 60 einen ersten Endteil 61 und einen zweiten Endteil 62 auf. Der erste Endteil 61 ist gemäß der Darstellung in Fig. 2 in den Strukturhalter 40 eingesteckt und darin lösbar arretiert. Der zweite Endteil 62 des Verbindungsarms 60 trägt den Verbindungsstift 70, welcher an dem zweiten Endteil 62 durch ein Dämpfungselement 100 elastisch nachgiebig befestigt ist.

Der Strukturhalter 40 ist ein flacher, plattenförmiger, mehreckiger Körper 42 mit paarweise einander gegenüberliegenden Seiten 43, 44 und den oben bereits erwähnten Seiten 47, 48. Jeder Verbindungsarm 60 ist ein gesondertes Teil, das in einer ersten Stellung 120 gemäß Fig. 2 oder in einer zweiten Stellung 125 gemäß Fig. 5 in den Strukturhalter 40 eingesteckt und darin lösbar verriegelt werden kann. Für jeden Verbindungsarm 60 hat der Strukturhalter 40 eine in Fig. 2 erkennbare Kammer 45, die nach außen hin in einer von dessen Seiten 43, 44 mündet. Der Strukturhalter 40 hat auf den beiden einander gegenüberliegenden Seiten 43, 44 jeweils einen angeformten Vorsprung 46, der eine gegen diese Seite abgewinkelte Stirnfläche 43a bzw. 44a aufweist, von der aus sich die Kammer 45 in den Körper 42 des Strukturhaltes 40 erstreckt. Der Körper 42, das Buchsenteil 52 und die Verbindungsarme 60 bestehen zweckmäßig aus Kunststoff, der mit Glas- oder Kohlefaser verstärkt sein kann, oder aus irgendeinem anderen in der Flugzeugtechnik üblichen Werkstoff. Die lösbare Verbindung des Verbindungsarms 60 mit dem Strukturhalter 40 ist in dem dargestellten Ausführungsbeispiel eine Clipverbindung, könnte aber ebenso gut eine Schraubenverbindung sein. Das Dämpfungselement 100, das an dem zweiten Endteil 62 des Verbindungsarms 60 befestigt ist, steht auf beiden Seiten jeweils über den Verbindungsarm 60 über, wie es am besten in Fig. 2 zu erkennen ist.

Das Buchsenteil 52 der Steckhalterung 50 weist ein Gehäuse 53 auf, welches einen federvorgespannten Schieber 54 enthält, der in Fig. 3 teilweise sichtbar ist. Der Schieber 54 ist durch das Einführen des Verbindungsstiftes 70 der Steckhalterung 50 auslenkbar. An dem Gehäuse 52 des Buchsenteils 50 ist ein Exzenterhebel 56 zum manuellen Betätigen, also zum Beispiel zum Lösen des federvorgespannten Schiebers 54 angebracht.

Das Befestigungssystem 10 ermöglicht das Herstellen einer Verbindung zwischen dem Ausstattungsteil 20 und der Tragstruktur 30 mit Hilfe des Strukturhalters 40 und der daran lösbar angebrachten Verbindungsarme 60 wahlweise mit oder ohne eine elektrische Kontaktvorrichtung 90. Das an dem Ausstattungsteil 20 befestigte Buchsenteil 52 bildet ein Lager, durch das eine elektrische Verbindung zwischen der Tragstruktur 30 und einer elektrischen Einrichtung des Ausstattungsteils 20 beim Fixieren dieses Lagers über den Verbindungsarm 60 hergestellt werden kann. Ohne eine elektrische Kontaktvorrichtung 90 hat das Lager einen Aufbau, wie er in Fig. 2 gezeigt ist. Mit der elektrischen Kontaktvorrichtung 90 hat das Lager einen Aufbau, wie er in Fig. 5 gezeigt ist.

Zu diesem Zweck ist der Verbindungsarm 60 so bemessen, dass, wenn der Verbindungsstift 70 in dem Buchsenteil 52 wie in Fig. 2 lösbar arretiert ist, der Verbindungsarm 60 in der ersten Stellung 120 über das Dämpfungselement 100 mit dem Buchsenteil 52 in einer Trennebene 80 in Berührung ist. In der zweiten Stellung 125, die in Fig. 5 gezeigt ist und in der der Verbindungsarm 60 um 180° um seine Längsachse gedreht ist, weist der Verbindungsarm 60 einen Abstand A von der Trennebene 80 auf, der durch die zwischen dem Verbindungsarm 60 und dem Buchsenteil 52 angeordnete elektrische Kontaktvorrichtung 90 überbrückt ist. In diesem Fall ist ein an dem Verbindungsarm 60 angebrachter anderer Verbindungsstift 75, der um den Abstand A länger als der Verbindungsstift 70 bemessen ist, durch die Kontaktvorrichtung 90 hindurchgeführt und in dem Buchsenteil 52 arretiert.

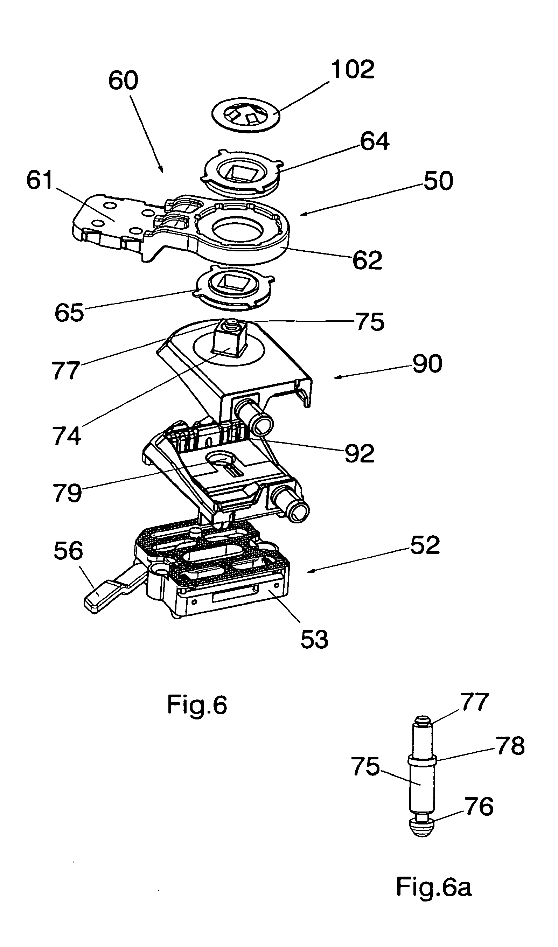

In den Fig. 3 und 6 ist die Verwendung von unterschiedlich langen Verbindungsstiften 70 bzw. 75 für den Fall, dass sich der Verbindungsarm 60 in der Stellung 120 nach Fig. 2 oder in der Stellung 125 nach Fig. 5 befindet, anschaulich gezeigt. Darüber hinaus ist in Fig. 6 die elektrische Kontaktvorrichtung 90 auseinander gezogen dargestellt. Jeder Verbindungsstift 70, 75 ist an seinem Verbindungsarm 60 so angebracht, dass er bei an dem Strukturhalter 40 befestigtem Verbindungsarm 60 zu der Trennebene 80 hin vorsteht, wie es in den Fig. 2 und 5 zu erkennen ist. Gemäß der Darstellung in Fig. 6 hat die Kontaktvorrichtung 90 elektrische Kontakte 92, die in Richtung der Längsachse 71 (vgl. Fig. 5) des anderen Verbindungsstiftes 75 miteinander verbindbar und voneinander trennbar sind. In Fig. 6 sind nur die elektrischen Kontakte 92 an der unteren Hälfte der Kontaktvorrichtung 90 sichtbar. Die obere Hälfte der Kontaktvorrichtung 90 trägt dazu komplementäre elektrische Kontakte. Jeder Verbindungsstift 70, 75 weist an seinem freien Ende eine Nut 76 (Fig. 3 und 6a) auf, mit der der federvorgespannte Schieber 54 in Eingriff bringbar ist. Darüber hinaus weist jeder Verbindungsstift 70, 75 an seinem anderen Ende eine weitere Nut 77 auf, mit der eine Haltescheibe 102 des Dämpfungselements 100 in Eingriff bringbar ist. Die Haltescheibe 102 hat gemäß Fig. 6 radial nach innen vorstehende federnde Finger, die in die Nut 77 eingreifen, so dass der zweite Endteil 62 des Verbindungsarms 60 zwischen zwei Anschlagscheiben 64, 65 auf dem Verbindungsstift 70 oder 75 federnd und lösbar festspannbar ist. Zum Erzielen der Stellungen 120, 125 gemäß den Fig. 2 bzw. 5 können Verbindungsarme 60 mit dem einen und dem anderen Verbindungsstift 70 bzw. 75 auf Lager gehalten werden. Es ist aber ebenso möglich, bei Bedarf einfach vor Ort den Verbindungsstift 70 gegen einen Verbindungsstift 75, und umgekehrt, auszutauschen.

Gemäß der Darstellung in den Fig. 1, 4 und 7 ist zur Anpassung an unterschiedliche Einbausituationen das Gehäuse 53 des Buchsenteils 52 der Steckhalterung 50 mit dem Ausstattungsteil 20 durch einen Verbinderhalter (im Englischen als connector bracket bezeichnet) 25 verbunden.

In Fig. 6a ist der Verbindungsstift 75 der Steckhalterung 50 nach Fig. 6 als eine Einzelheit dargestellt. Unterhalb der Nut 77 ist der Verbindungsstift 75 mit einem Bund 78 versehen. Die obere Hälfte der elektrischen Kontaktvorrichtung 90 trägt gemäß der Darstellung in Fig. 6 eine im Querschnitt quadratische Buchse 74. Die Buchse 74 weist eine Bohrung auf, in welche der Verbindungsstift 75 von unten her soweit einschiebbar ist, bis der Bund 78 an der Buchse 74 anschlägt und die Nut 77 sich oberhalb der Buchse 74 befindet, wie es in Fig. 6 gezeigt ist, damit die federnden Finger der Haltescheibe 102 in die Nut 77 eingreifen können. Der untere Teil des Verbindungsstiftes 75 erstreckt sich durch eine Bohrung 79 in der unteren Hälfte der Kontaktvorrichtung 90, so dass der federvorgespannten Schieber 54 mit der Nut 76 in Eingriff bringbar ist.

### Bezugszeichenliste

| | |
|---|---|
| 10 | Befestigungssystem |
| 20 | Ausstattungsteil |
| 25 | Verbinderhalter (connector bracket) |
| 30 | Tragstruktur |
| 40 | Strukturhalter (structure bracket) |
| 42 | Körper |
| 43 | Seite |
| 43a | Stirnfläche |
| 44 | Seite |
| 44a | Stirnfläche |
| 45 | Kammer |
| 46 | Vorsprung |
| 47 | Seite |
| 48 | Seite |
| 49 | Oberseite |
| 50 | Steckhalterung |
| 52 | Buchsenteil |
| 53 | Gehäuse |
| 54 | Schieber |
| 56 | Exzenterhebel |
| 60 | Verbindungsarm |
| 61 | erster Endteil |
| 62 | zweiter Endteil |
| 63 | Längsachse |
| 64 | Anschlagscheibe |
| 65 | Anschlagscheibe |
| 70 | Verbindungsstift |
| 71 | Längsachse |
| 74 | Buchse |
| 75 | anderer Verbindungsstift |
| 76 | Nut |
| 77 | Nut |
| 78 | Bund |
| 79 | Bohrung |
| 80 | Trennebene |
| 85 | Ebene |
| 90 | elektrische Kontaktvorrichtung |
| 92 | elektrische Kontakte |
| 100 | Dämpfungselement |
| 102 | Haltescheibe |
| 110 | Bügel |
| 120 | erste, "normale" Stellung |
| 125 | zweite, um 180° gedrehte Stellung |
| A | Abstand |

## Patentansprüche

1. Befestigungssystem (10) zum lösbaren Befestigen eines Ausstattungsteils (20) wie einer Innenverkleidung an einer Tragstruktur (30) wie einem Flugzeugrumpf,
mit wenigstens einer Steckhalterung (50) aus einem Buchsenteil (52) und einem darin lösbar arretierbaren Verbindungsstift (70),
mit einem Strukturhalter (40),
mit wenigstens einem Verbindungsarm (60) zum Befestigen der Steckhalterung (50) zwischen dem Ausstattungsteil (20) und der Tragstruktur (30) und
mit einer zwischen dem Verbindungsarm (60) und dem Buchsenteil (52) anzuordnenden elektrischen Kontaktvorrichtung (90),
wobei der Verbindungsarm (60) einen ersten und einen zweiten Endteil (61, 62) aufweist, von denen einer (62) den Verbindungsstift (70) trägt, wobei der Verbindungsarm (60) gekröpft und so bemessen ist, dass wenn der Verbindungsstift (70) in dem Buchsenteil (52) lösbar arretiert ist, der Verbindungsarm (60) in einer ersten, "normalen" Stellung (120) ist, in der er und das Buchsenteil (52) in einer Trennebene (80) miteinander in Berührung sind, wobei aber, wenn der Verbindungsarm (60) in einer zweiten, um 180° um seine Längsachse gedrehten Stellung (125) ist, der Verbindungsarm (60) einen Abstand (A) von der Trennebene (80) aufweist, der durch die elektrische Kontaktvorrichtung (90) überbrückt oder überbrückbar ist, und an dem Verbindungsarm (60) ein anderer Verbindungsstift (75) angebracht ist, der um den Abstand (A) länger als der eine Verbindungsstift (70) bemessen ist, wobei der andere Verbindungsstift durch die Kontaktvorrichtung (90) hindurchgeführt oder hindurchführbar und in dem Buchsenteil (52) arretiert oder arretierbar ist,
wobei die Beabstandung des Strukturhalters (40) von dem Buchsenteil (52) in Richtung des Verbindungsstiftes (70) bei "normaler" Montage des Verbindungsarmes (60) ohne Anbringung der elektrischen Kontaktvorrichtung und bei der um 180° gedrehten Lage des Verbindungsarms (60) bei Anbringung der elektrischen Kontaktvorrichtung (90) gleich bleibt und
wobei der Strukturhalter (40) so ausgebildet ist, dass er eine Aufnahme des Verbindungsarms (60) sowohl in der "normalen" als auch in der um 180° gedrehten Lage erlaubt.

2. Befestigungssystem (10) nach Anspruch 1, **dadurch gekennzeichnet, dass** der Strukturhalter (40) ein flacher, plattenförmiger, mehreckiger Körper (42) mit wenigstens einem Paar einander gegenüber liegender Seiten (43, 44) ist, der wenigstens eine in eine dieser Seiten (43, 44) mündende Kammer (45) aufweist, in der der erste Endteil (61) des Verbindungsarms (60) lösbar verriegelt oder verriegelbar ist.

3. Befestigungssystem (10) nach Anspruch 2, **dadurch gekennzeichnet, dass** jeweils die Seite (43, 44), in die die Kammer (45) mündet, einen Vorsprung (46) mit einer gegen diese Seite abgewinkelten Stirnfläche (43a, 44a) aufweist, wobei die Kammer (45) in diese Stirnfläche (43a, 44a) mündet.

4. Befestigungssystem (10) nach einem der vorhergehenden Ansprüche, **dadurch gekennzeichnet, dass** jeder Verbindungsstift (70, 75) über ein Dämpfungselement (100) mit dem zweiten Endteil (62) seines Verbindungsarms (60) verbunden ist.

5. Befestigungssystem (10) nach Anspruch 4, **dadurch gekennzeichnet, dass** sich das Dämpfungselement (100) durch den zweiten Endteil (62) des Verbindungsarms (60) erstreckt und auf beiden Seiten jeweils über den Verbindungsarm (60) übersteht.

6. Befestigungssystem (10) nach einem der vorhergehenden Ansprüche, **dadurch gekennzeichnet, dass** die lösbare Verbindung des Verbindungsarms (60) mit dem Strukturhalter (40) eine Clip- oder eine Schraubenverbindung ist.

7. Befestigungssystem (10) nach einem der vorhergehenden Ansprüche, **gekennzeichnet durch** einen auf dem plattenförmigen Körper (42) des Strukturhalters (40) zwischen zwei einander gegenüber liegenden Seiten (43, 44) angebrachten Bügel (110) zur Befestigung des Strukturhalters (40) an der Tragstruktur (30).

8. Befestigungssystem (10) nach einem der vorhergehenden Ansprüche, **dadurch gekennzeichnet, dass** jeder Verbindungsstift (70, 75) an seinem Verbindungsarm (60) so angebracht ist, dass er bei an dem Strukturhalter (40) befestigtem Verbindungsarm (60) zu der Trennebene (80) hin vorsteht.

9. Befestigungssystem (10) nach einem der vorhergehenden Ansprüche, **dadurch gekennzeichnet, dass** das Buchsenteil (52) ein Gehäuse (53) aufweist, welches einen federvorgespannten Schieber (54) enthält, der durch das Einführen des einen oder anderen Verbindungsstiftes (70, 75) auslenkbar ist.

10. Befestigungssystem (10) nach Anspruch 9, **gekennzeichnet durch** einen an dem Gehäuse (52) des Buchsenteils (50) angebrachten Exzenterhebel (56) zum Betätigen des federvorgespannten Schiebers (54).

11. Befestigungssystem (10) nach Anspruch 9 oder 10, **dadurch gekennzeichnet, dass** jeder Verbindungsstift (70, 75) an seinem freien Ende eine Nut (76) aufweist, mit der der federvorgespannte Schieber (54) in Eingriff ist oder bringbar ist

12. Befestigungssystem (10) nach Anspruch 11, **dadurch gekennzeichnet, dass** jeder Verbindungsstift (70, 75) an seinem anderen Ende eine weitere Nut (77) aufweist, mit der eine Haltescheibe (102) in Eingriff ist oder bringbar ist.

13. Befestigungssystem (10) nach einem der vorhergehenden Ansprüche, **dadurch gekennzeichnet, dass** die Kontaktvorrichtung (90) elektrische Kontakte (92) hat, die in Richtung der Längsachse (71) des anderen Verbindungsstiftes (75) miteinander verbindbar und voneinander trennbar sind.

## Claims

1. A fastening system (10) for the releasable fastening of a trim component (20), such as interior panelling, to a support structure (30), such as an aircraft fuselage,
with at least one plug-in holder (50) comprising a socket part (52) and a connecting pin (70) which can be releasably retained in the socket part,
with a structure bracket (40),
with at least one connecting arm (60) for fastening the plug-in holder (50) between the trim component (20) and the support structure (30), and
with an electrical contact device (90) which is to be arranged between the connecting arm (60) and the socket part (52),
wherein the connecting arm (60) has a first and a second end part (61, 62), one of which (62) carries the connecting pin (70),
wherein the connecting arm (60) is bent and is dimensioned so that, when the connecting pin (70) is releasably retained in the socket part (52), the connecting arm (60) is in a first, normal position (120) in which it and the socket part (52) are in contact with one another in a dividing plane (80), wherein, however, when the connecting arm (60) is in a second position (125) rotated through 180° about its longitudinal axis, the connecting arm (60) has a distance (A) from the dividing plane (80) which bridges or can be bridged by the electrical contact device (90), and another connecting pin (75) is mounted on the connecting arm (60), which is designed to be longer by the distance (A) than the connecting pin (70),
wherein the other connecting pin is guided or can be guided through the contact device (90) and is retained or can be retained in the socket part (52),
wherein the spacing of the structure bracket (40) from the socket part (52) in the direction of the connecting pin (70) for normal mounting of the connecting arm (60) without installation of the electrical contact device and for the position of the connecting arm (60) rotated through 180° with installation of the electrical contact device (90) remains the same,
and
wherein the structure bracket (40) is so formed so that it allows reception of the connecting arm (60) both in the normal position and in the position rotated through 180°.

2. A fastening system (10) according to Claim 1, **characterised in that** the structure bracket (40) is a flat, plate-shaped, polygonal body (42) with at least one pair of mutually opposite sides (43,44), which has at least one chamber (45) which opens into one of the sides (43,44) and in which the first end part (61) of the connecting arm (60) is locked or can be locked releasably.

3. A fastening system (10) according to Claim 2, **characterised in that** each of the sides (43,44) into which the chamber (45) opens has a projection (46) with an end face (43a,44a) angled towards this side, wherein the chamber (45) opens into this end face (43a,44a).

4. A fastening system (10) according to any one of the preceding Claims, **characterised in that** each connecting pin (70,75) is connected via a damping element (100) to the second end part (62) of its connecting arm (60).

5. A fastening system (10) according to Claim 4, **characterised in that** the damping element (100) extends through the second end part (62) of the connecting arm (60) and projects on both sides over the respective connecting arm (60).

6. A fastening system (10) according to any one of the preceding Claims, **characterised in that** the releasable connection of the connecting arm (60) to the structure bracket (40) is a clip connection or a screw connection.

7. A fastening system (10) according to any one of the preceding Claims, **characterised by** a mounting bracket (110) mounted on the plate-shaped body (42) of the structure bracket (40) between the two mutually opposite sides (43,44) for fastening the structure bracket (40) to the support structure (30).

8. A fastening system (10) according to any one of the preceding Claims, **characterised in that** each connecting pin (70,75) is mounted on its connecting arm (60) so that it protrudes towards the dividing plane (80) when the connecting arm (60) is fastened to the structure bracket (40).

9. A fastening system (10) according to any one of the preceding Claims, **characterised in that** the socket part (52) has a housing (53) which contains a spring-loaded slide (54) which can be deflected by insertion of one or the other of the connecting pins (70,75).

10. A fastening system (10) according to Claim 9, **characterised by** an eccentric lever (56) mounted on the housing (53) of the socket part (52) for actuating the spring-loaded slide (54).

11. A fastening system (10) according to Claim 9 or 10, **characterised in that** each connecting pin (70,75) has on its free end a groove (76) with which the spring-loaded slide (54) is engaged or can be engaged.

12. A fastening system (10) according to Claim 11, **characterised in that** each connecting pin (70,75) has on its other end another groove (77) with which a retaining plate (102) is engaged or can be engaged.

13. A fastening system (10) according to any one of the preceding Claims, **characterised in that** the contact device (90) has electrical contacts (92) which can be connected to each other and can be separated from each other in the direction of the longitudinal axis (71) of the other connecting pin (75).

## Revendications

1. Système de fixation (10) pour permettre la fixation amovible d'une garniture (20) telle qu'un habillage interne sur une structure support (30) telle qu'un fuselage d'avion, comportant :
au moins un élément d'attache par enfichage (50) constitué d'une partie formant douille (52) et d'une broche de liaison (70) pouvant être bloquée dans celle-ci de façon amovible,
un support de structure (40),
au moins un bras de liaison (60) pour permettre la fixation de l'élément d'attache par enfichage (50) entre la garniture (20) et la structure support (30), et
un dispositif de contact électrique (90) devant être monté entre le bras de liaison (60) et la partie formant douille (52),
le bras de liaison (60) comportant une première et une seconde extrémité (61, 62) dont l'une (62) porte la broche de liaison (70),
le bras de liaison (60) étant coudé et dimensionné de sorte que lorsque la broche de liaison (70) est bloquée de façon amovible dans la partie formant douille (52) ce bras de liaison (60) est situé dans une première position « normale » (120) dans laquelle il est en contact avec la partie formant douille (52) dans un plan de séparation (80), mais, que lorsque le bras de liaison (60) est situé dans une seconde position (125) décalée par rotation de 180° autour de son axe longitudinal ce bras de liaison (60) soit à une distance A du plan de séparation (80) surmontée ou pouvant être surmontée par le dispositif de contact électrique (90), et, sur le bras de liaison (60) est montée une autre broche de liaison (75) qui est plus longue de la distance A que la broche de liaison (70),
l'autre broche de liaison passant ou pouvant passer au travers du dispositif de contact (90) et étant ou pouvant être bloquée dans la partie formant douille (52),
la distance entre le support de structure (40) et la partie formant douille (52) dans la direction de la broche de liaison (70), dans le cas d'un montage « normal » du bras de liaison (60), sans mise en place du dispositif de contact électrique, et dans la position du bras de liaison (60) déplacée par rotation de 180° lors de la mise en oeuvre du dispositif de contact électrique (90) restant la même, et
le support de structure (40) étant réalisé de sorte qu'il permette la réception du bras de liaison (60) aussi bien dans la position « normale » qu'également dans la position déplacée par rotation de 180°.

2. Système de fixation (10) conforme à la revendication 1,
**caractérisé en ce que**
le support de structure (40) est un corps polygonal plat en forme de plateau (42) comportant au moins une paire de côtés (43, 44) opposé, dont au moins un, comporte une chambre (45) débouchant dans ce côté et dans laquelle est ou peut être bloquée de manière amovible la première extrémité (61) du bras de liaison (60).

3. Système de fixation (10) conforme à la revendication 2,
**caractérisé en ce que**
le côté respectif (43, 44) dans lequel débouche la chambre (45) comporte une saillie (46) avec une surface frontale (43a, 44a) coudée par rapport à ce côté, la chambre (45) débouchant dans cette surface frontale (43a, 44a).

4. Système de fixation (10) conforme à l'une des revendications précédentes,
**caractérisé en ce que**
chacune des broches de liaison (70, 75) est reliée par l'intermédiaire d'un élément d'amortissement (100) à la seconde extrémité (62) de son bras de liaison (60).

5. Système de fixation (10) conforme à la revendication 4,
**caractérisé en ce que**
l'élément d'amortissement (100) s'étend au travers de la seconde extrémité (62) du bras de liaison (60) et dépasse de celui-ci de chaque côté.

6. Système de fixation (10) conforme à l'une des revendications précédentes,
**caractérisé en ce que**
la liaison amovible du bras de liaison (60) avec le support de structure (40) est une liaison par encliquetage ou une liaison à vis.

7. Système de fixation (10) conforme à l'une des revendications précédentes,
**caractérisé par**
un étrier (110) permettant la fixation du support de structure (40) à la structure support (30) monté sur le corps en forme de plateau (42) du support de structure (40) entre les deux côtés opposés (43, 44).

8. Système de fixation (10) conforme à l'une des revendications précédentes,
**caractérisé en ce que**
chaque broche de liaison (70, 75) est montée sur son bras de liaison (60) de sorte qu'elle dépasse du plan de séparation (80) lorsque le bras de liaison (60) est fixé au support de structure (40).

9. Système de fixation (10) conforme à l'une des revendications précédentes,
**caractérisé en ce que**
la partie formant douille (52) comporte un boitier (53) qui renferme un tiroir (54) précontraint électriquement pouvant pivoter suite à l'introduction de l'une ou de l'autre broche de liaison (70, 75).

10. Système de fixation (10) conforme à la revendication 9,
**caractérisé par**
un levier à excentrique (56) monté sur le boitier (52) de la partie formant douille (50) pour permettre d'actionner le tiroir (54) élastiquement précontraint.

11. Système de fixation (10) conforme à la revendication 9 ou 10,
**caractérisé en ce que**
chacune des broches de liaison (70, 75) comporte à son extrémité libre une rainure (76) avec laquelle le tiroir élastiquement précontraint (54) est ou peut être mis en prise.

12. Système de fixation (10) conforme à la revendication 11,
**caractérisé en ce que**
chaque broche de liaison (70, 75) comporte à son autre extrémité une autre rainure (77) avec laquelle un disque de maintien (102) est ou peut être mis en prise.

13. Système de fixation (10) conforme à l'une des revendications précédentes,
**caractérisé en ce que**
le dispositif de contact (90) comporte des contacts électriques (92) qui peuvent être reliés entre eux ou séparés les uns des autre en direction de l'axe longitudinal (71) de l'autre broche de liaison (75).
